# EUROPÄISCHE PATENTSCHRIFT

(11) **EP 1 839 931 B1**
(45) Veröffentlichungstag und Bekanntmachung des Hinweises auf die Patenterteilung: **16.11.2011**
(21) Anmeldenummer: 07006128.8
(22) Anmeldetag: 24.03.2007
(51) Int. Cl.: B60N 2/015

(54) **Trägerprofil eines Sitzuntergestells an einer Bodenanlage eines Omnibusses**
Mounting profile of a seat base frame on the floor construction of an omnibus
Profil de support d'un bâti de siège sur une installation de sol d'un omnibus

(30) Priorität: 30.03.2006 DE 102006014719
(43) Veröffentlichungstag der Anmeldung: 03.10.2007
(73) Patentinhaber: Daimler AG, 70327 Stuttgart (DE)
(72) Erfinder: Mäusle, Rainer, 89356 Haldenwang (DE)
(74) Vertreter: Moore, David Simon

(56) Entgegenhaltungen:
- DE-A1- 4 244 395
- US-A- 5 839 787

## Beschreibung

Die Erfindung betrifft ein Trägerprofil für eine Bodenanlage eines Kraftwagens, insbesondere eines Omnibusses, der in dem Oberbegriff des Patentanspruchs 1 angegebenen Art. Ein solches Trägerprofil ist aus der US 5 839 787 A bekannt.

Insbesondere vom Serienfahrzeugbau von Omnibussen sind derartige Trägerprofile als bekannt zu entnehmen, mit welchen die Bodenanlage des Omnibusses auszusteifen sind und auf welchen beispielsweise Bodenplatten der Bodenanlage ruhen. Um die jeweiligen Sitzuntergestelle der Sitzanlagen des Omnibusses an der Bodenanlage befestigen zu können, sind üblicherweise in Fahrzeuglängsrichtung verlaufende Sitzschienen vorgesehen, innerhalb welchen Nutensteine aufgenommen werden können. Die Nutzsteine sind dabei über Verbindungsmittel, wie beispielsweise Schrauben, mit dem Sitzuntergestell zu verbinden, wodurch die gesamte Sitzanlage an der Bodenanlage gesichert ist. Diese Sicherung erfolgt, nachdem die jeweiligen Sitzanlagen in einem gewissen Abstand bzw. mit einer gewissen Beinfreiheit zueinander innerhalb des Fahrgastraums des Omnibusses verteilt worden sind.

Die Sitzschiene wird dabei üblicherweise in die Bodenanlage integriert, indem diese mit einem der in Fahrzeuglängsrichtung verlaufenden, an der entsprechenden Stelle angeordneten Trägerprofil der Bodenanlage verbunden wird. Hierzu wird das Trägerprofil üblicherweise mit einem entsprechend großen Befestigungsflansch versehen, an welchem die Sitzschiene anschließend beispielweise mittels von Schraubverbindungen festgelegt werden kann. Als nachteilig bei dieser Anordnung ist jedoch der Umstand anzusehen, dass die Integration der Sitzschiene in die Bodenanlage relativ aufwändig ist und darüber hinaus eine äußerst stabile Verbindung notwenig ist, um die Sitzschiene - beispielsweise für den Fall einer Kollision des Omnibusses - entsprechend stabil an der Bodenanlage des Omnibusses anzubinden.

Ein weiteres Problem der bisher bekannten Befestigungsanordnungen des jeweiligen Sitzuntergestells der Sitzanlage an den Sitzschienen besteht darin, dass die Nutensteine üblicherweise im Bereich von Einstecköffnungen beispielsweise am vorderen oder hinteren Ende der Sitzschiene in diese eingesteckt und entlang der Führungsschienen in ihre jeweilige Position unterhalb des zugehörigen Sitzuntergestells verschoben werden müssen. Die Positionierung der Nutensteine in ihrer innerhalb der Führungsschiene aufgenommenen Stellung unterhalb des zugehörigen Sitzuntergestells ist dementsprechend montageaufwändig.

Allgemeiner technologischer Hintergrund zu Nutensteinen und deren Verwendung ist dabei der DE 42 44 395 A1 zu entnehmen. Weiterhin ist aus der US 5 839 787 A ein universelles Sitzgestell eines Personenbeförderungsfahrzeugs bekannt, welches extrudierte Profile für den Sitzaufbau verwendet.

Aufgabe der vorliegenden Erfindung ist es daher, ein Trägerprofil der eingangs genannten Art zu schaffen, mit dem der Montageaufwand bei der Fertigung der Bodenanlage sowie der Positionierung der Sitzanlagen an der Bodenanlage deutlich reduziert werden kann.

Diese Aufgabe wird erfindungsgemäß durch ein Trägerprofil mit den Merkmalen des Patentanspruchs 1 gelöst. Vorteilhafte Ausgestaltungen mit zweckmäßigen und nicht-trivialen Weiterbildungen der Erfindung sind in den abhängigen Patentansprüchen beschrieben.

Bei dem Trägerprofil nach Patentanspruch 1 ist es erfindungsgemäß vorgesehen, dass die aufbaufeste Sitzschiene in das Trägerprofil der Bodenanlage integriert ist. Im Unterschied zum bisherigen Stand der Technik, bei dem die Sitzschiene als separates Teil ausgebildet und in einem aufwändigen Fertigungsprozess an einem Halteflansch des entsprechenden Trägerprofils festgelegt werden musste, ist es erfindungsgemäß also vorgesehen, die Sitzschiene als integraler Bestandteil des Trägerprofils der Bodenanlage auszubilden. Dies ermöglicht nicht nur eine bedeutend einfachere Montage der Bodenanlage des Kraftwagens, insbesondere des Omnibusses, sondern infolge der integralen Ausbildung mit dem Trägerprofil auch eine bedeutend steifere und stabilere Festlegung der Sitzschiene an der Bodenanlage. Somit ist es nunmehr nicht mehr erforderlich, in einem aufwändigen Herstellungsprozess die Sitzschiene hinreichend stabil am zugehörigen Trägerprofil der Bodenanlage anzubinden, sondern vielmehr ist die Sitzschiene unmittelbar in das Trägerprofil der Bodenanlage integriert. Demgemäß ist die Sitzschiene - und somit auch die jeweiligen Sitzanlagen - auf besonders sichere Weise an der Bodenanlage des Kraftwagens bzw. des Omnibusses festgelegt.

Erfindungsgemäß ist dabei vorgesehen, das Trägerprofil als aus einem Metallblechteil gestaltetes Rollprofil auszubilden. Hierdurch ist es auf einfache Weise möglich, ein aus einem äußerst stabilen Werkstoff, wie beispielsweise ein aus Stahllegierung hergestelltes Metallblechteil zu dem Trägerprofil umzuformen, um ein dementsprechend äußerst steifes und gut in die Bodenanlage integrierbares Trägerprofil zu erreichen.

In weiterer Ausgestaltung der Erfindung hat es sich als zudem vorteilhaft gezeigt, das Trägerteil einteilig auszubilden und vorzugsweise aus einer Stahllegierung herzustellen. Hierdurch lässt sich einerseits ein fertigungstechnisch besonders einfaches und andererseits äußerst steifes und stabiles Trägerprofil mit der darin integrierten Sitzschiene schaffen.

In weiterer Ausgestaltung der Erfindung hat es sich darüber hinaus als vorteilhaft gezeigt, die an einen Schlitz zur Hindurchführung von Verbindungsmittel zwischen dem Nutenstein und dem Sitzuntergestell angrenzenden Bereiche der Sitzschiene mit einer gedoppelten Wand zu versehen. Eine derart gedoppelte Wand ermöglicht eine besonders steife Abstützung des Nutensteins gegenüber der Sitzschiene und eine dementsprechend äußerst steife und stabile Festlegung des Sitzuntergestells bzw. der Sitzanlage gegenüber der Bodenanlage.

Ein besonders steifes Trägerprofil kann schließlich geschaffen werden, wenn dieses eine Mehrzahl von Kammern umfasst, wobei eine der Kammern die Sitzschiene zur Aufnahme der Nutensteine bildet. Somit kann ein Trägerprofil mit einer sehr hohen Steifigkeit geschaffen werden, welches darüber hinaus vorzugsweise eine ebene - beispielsweise kastenförmige - Außenkontur aufweist.

Bei einer nicht beanspruchten Befestigungsanordnung ist vorgesehen, dass der Nutenstein über den Schlitz in die Sitzschiene einzusetzen ist. Mit anderen Worten ist es im Unterschied zum bisher bekannten Stand der Technik nicht mehr erforderlich, die Nutensteine an Einstecköffnungen - beispielsweise am vorderen oder hinteren Ende der Sitzschiene - in diese einzustecken und über eine längere Distanz entlang dieser bis unterhalb des zugehörigen Sitzuntergestells zu verschieben, sondern vielmehr können die vorgesehenen Nutensteine nunmehr unmittelbar vor oder hinter dem Sitzuntergestell über den Schlitz in die Sitzschiene eingesetzt werden. Dies ermöglicht eine bedeutend einfachere Montage der Sitzanlagen innerhalb des Fahrgastraums des Kraftwagens bzw. des Omnibusses. Insbesondere ist es hierdurch beispielsweise möglich, eine zusätzliche Sitzanlage zwischen bereits angeordneten Sitzanlagen zu integrieren, in dem lediglich die entsprechenden Nutensteine unterhalb des Sitzuntergestells in die Sitzschiene eingesteckt und positioniert werden.

Es hat sich als vorteilhaft gezeigt, dass die aufbaufeste Sitzschiene in ein Trägerprofil, insbesondere nach einem der Patentansprüche 1 bis 4 integriert ist. Hierdurch ergibt sich nicht nur eine fertigungstechnisch besonders einfache Integration der Sitzschiene in die Bodenanlage, sondern im Weiteren eine bedeutend vereinfachte Montage der Sitzanlagen innerhalb des Kraftwagens bzw. des Omnibusses.

Eine einerseits besonders gute Aussteifung der Bodenanlage und andererseits besonders leichte Befestigungsmöglichkeit für das jeweilige Sitzuntergestell ist geschaffen, wenn das Trägerprofil im Eckbereich zwischen einem waagrecht verlaufenden Boden und einer aufrecht verlaufenden Wand angeordnet ist, wobei der Schlitz der Sitzschiene im Bereich der aufrechten Wand verläuft.

Ein besonders einfach über den Schlitz in die Sitzschiene einzusetzender Nutenstein ist geschaffen, wenn dieser einer Breitseite gegenüberliegend zwei abgeschrägte Flächen umfasst, wobei die eine abgeschrägte Fläche einen erheblich größeren Winkel mit der Breitseite einschließt als die andere abgeschrägte Fläche. Hierdurch kann der Nutenstein auf einfache Weise dadurch in die Sitzschiene eingesetzt werden, dass dieser zunächst mit der den größeren Winkel aufweisenden Seite her durch den Schlitz hindurchgeführt wird und anschließend durch eine Drehbewegung vollständig in die Sitzschiene eingesetzt wird.

Schließlich hat es sich als vorteilhaft gezeigt, den Nutenstein mit seiner Breitseite gegen eine sitzschienenseitige Stützwand abzustützen, in der der Schlitz zur Hindurchführung des jeweiligen Verbindungsmittels vorgesehen ist. Hierdurch ist eine besonders sichere und großflächige Abstützung des Nutensteins unmittelbar an derjenigen Stelle geschaffen, an der der Nutzenstein über das Verbindungsmittels mit dem Sitzuntergestell verbunden ist.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine schematische Perspektivansicht auf die Befestigungsanordnung eines Sitzuntergestells einer Sitzanlage an einer Bodenanlage eines Omnibusses, wobei ein in Fig. 1 links erkennbares, in Fahrzeuglängsrichtung verlaufendes Trägerprofil der Bodenanlage mit einer integral ausgebildeten Sitzschiene versehen ist;
- Fig. 2: eine im Bereich des Trägerprofils geschnitten dargestellte und ausschnittsweise Vorderansicht auf das an der Bodenanlage abgestützte Sitzuntergestell der Sitzanlage, wobei insbesondere die Anordnung des Sitzuntergestells an dem innerhalb der Sitzschiene des Trägerprofils aufgenommenen Nutenstein erkennbar ist;
- Fig. 3: eine schematische und vergrößerte Schnittansicht gemäß dem Detail III in Fig. 2, wobei insbesondere die Befestigungsanordnung des Sitzuntergestells an der Sitzschiene des Trägerprofils erkennbar ist;
- Fig. 4: jeweils in schematischer Vorderansicht, Seitenansicht und Perspektivansicht den innerhalb der Sitzschiene anzuordnenden Nutenstein; und in
- Fig. 5: eine schematische Perspektivansicht auf das Trägerprofil gemäß den Fig. 1 bis 3, wobei das Einsetzen des in Fig. 4 dargestellten Nutensteins in die innerhalb des Trägerprofils integrierte Sitzschiene in einer Abfolge von acht Schritten dargestellt ist.

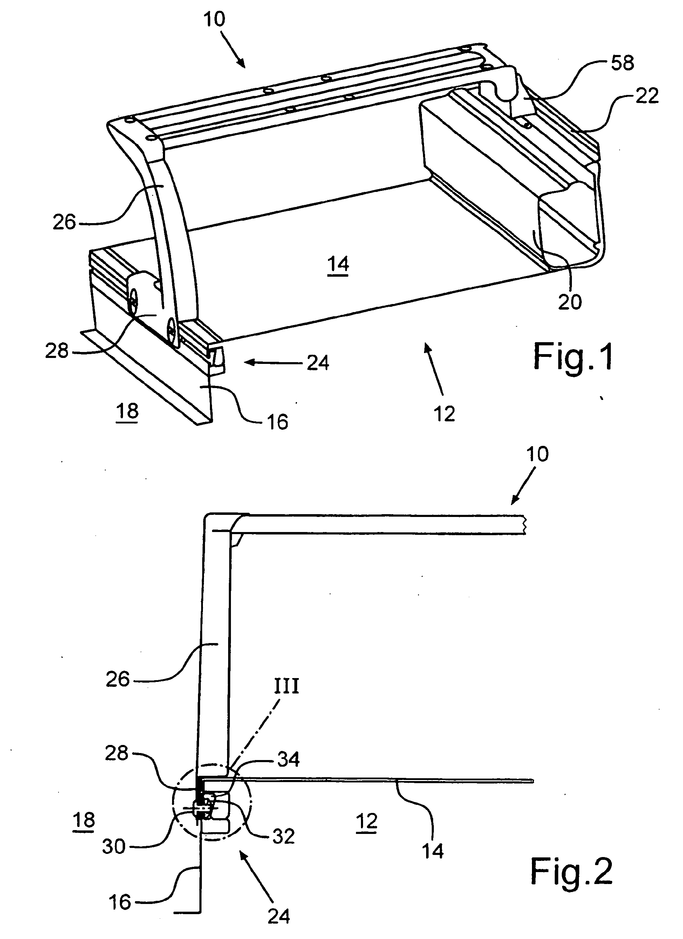

In Fig. 1 ist in einer schematischen Perspektivansicht die Befestigungsanordnung eines Sitzuntergestells 10 einer weiter nicht dargestellten Sitzanlage an einer Bodenanlage 12 eines hier als Omnibus ausgebildeten Kraftwagens ausschnittsweise dargestellt. Von der Bodenanlage 12 ist ausschnittsweise ein waagerecht verlaufender Boden 14 unterhalb der jeweiligen Sitzanlage dargestellt, an welchen sich innenseitig eine aufrecht verlaufende schmale Wand 16 anschließt. Die schmale Wand 16 begrenzt dabei einen Mittelgang 18 zwischen zwei Reihen von Sitzanlagen innerhalb des Fahrgastraums des Omnibusses. Nach außen hin verläuft der Boden 14 bis an einen äußeren Längsträger 20, an dessen Außenseite sich eine lediglich ausschnittsweise erkennbare Seitenwand 22 des Omnibusses erstreckt.

Im Eckbereich zwischen dem Boden 14 und der aufrechten schmalen Wand 16 erstreckt sich in Fahrzeuglängsrichtung ein Trägerprofil 24, welches zur Aussteifung der Bodenanlage 12 dient und beispielsweise über nicht dargestellte Querträgerelemente in die Struktur der Bodenanlage 12 eingebunden ist.

Insbesondere in Zusammenschau mit Fig. 2, welche in einer ausschnittsweise im Bereich des Trägerprofils 24 der Bodenanlage 12 geschnitten dargestellten Vorderansicht die Befestigungsanordnung des Sitzuntergestells 10 gemäß Fig. 1 zeigt, wird dessen Befestigung an der Bodenanlage 12 im Bereich des Trägerprofils 24 näher erkennbar. Eine Stütze 26 des Sitzuntergestells 10 ist oberseitig der Bodenanlage 12 an dem Boden 14 abgestützt. Darüber hinaus umfasst die Stütze 26 einen gegenüber dem Boden 14 nach unten hin erhaben abstehenden breiten Schenkel 28, der flächenparallel zur aufrechten schmalen Wand 16 verläuft.

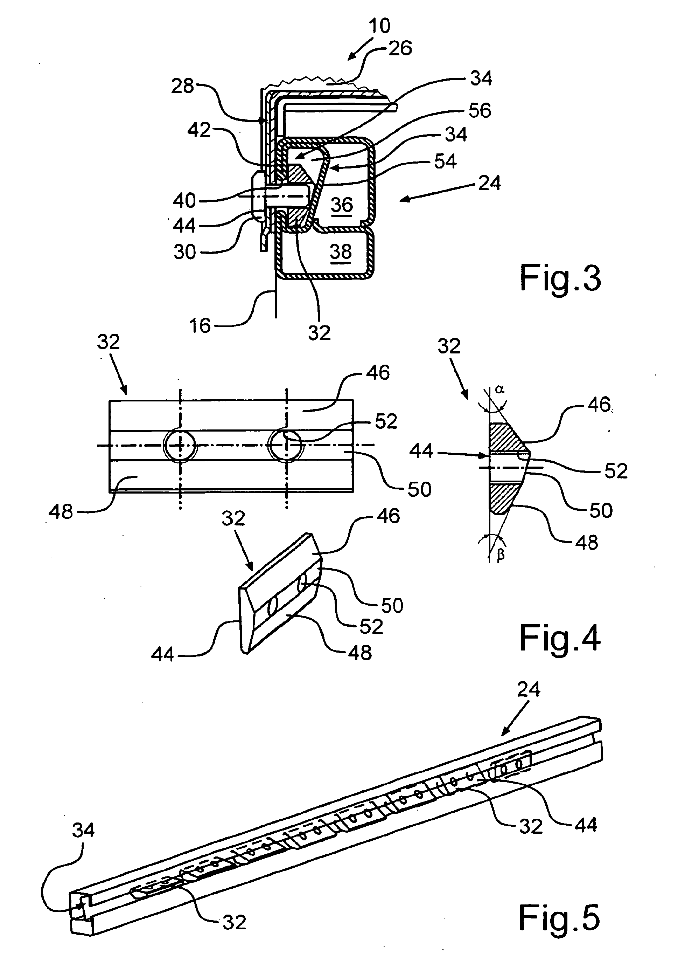

In Zusammenschau mit Fig. 3, welche die in Fig. 2 erkennbare Befestigungsanordnung des Schenkels 28 der Stütze 26 des Sitzuntergestells 10 an dem Trägerprofil 24 in einer vergrößerten und ausschnittsweisen Schnittansicht gemäß dem Detail III in Fig. 2 darstellt, wird erkennbar, dass innerhalb des Schenkel 28 Durchgangsöffnungen für Verbindungsmittel in Form von Schrauben 30 vorgesehen sind. Die Schrauben 30 sind am vorderen und hinteren Ende des Schenkels 28 eingebracht. Aus Fig. 3 ist insbesondere erkennbar, dass die Schrauben 30 mit jeweils zugehörigen Nutensteinen 32 zusammenwirken, welche insbesondere unter Bezugnahme auf Fig. 4 noch näher erläutert sind. Dabei ist erkennbar, dass der Nutenstein 32 innerhalb einer Sitzschiene 34 angeordnet ist, welche ihrerseits integraler Bestandteil des Trägerprofils 24 ist. Dabei bildet die Sitzschiene 34 eine Kammer des zwei weitere Kammern 36, 38 umfassenden Trägerprofils 24, welches seinerseits im Querschnitt im Wesentlichen rechteckförmig ausgebildet ist. Das einteilig gestaltete Trägerprofil 24 ist vorliegend als Rollprofil aus einem Metallblechteil bestehend aus einer Stahllegierung hergestellt worden. Mit anderen Worten ist als Ausgangswerkstoff ein Stahlblechteil verwendet worden, welches entsprechend gerollt bzw. umgeformt worden ist. Insbesondere ist dabei aus Fig. 3 erkennbar, dass die Sitzschiene 34 bzw. das Trägerprofil 24 auf seiner an den Schenkel 28 der Stütze 26 des Sitzuntergestells angrenzenden Seite einen Schlitz 40 aufweist, durch welchen die Schrauben 30 hindurchragen. Der Schlitz erstreckt sich über die gesamte Länge des Trägerprofils 24 im Bereich der vertikal verlaufenden aufrechten Wand 16. Weiterhin ist aus Fig. 3 erkennbar, dass die Sitzschiene 34 bzw. das Trägerprofil 24 in den an den Schlitz 40 angrenzenden Bereichen - dem Schenkel 28 gegenüberliegend - eine gedoppelte Wand 42 aufweist. Diese gedoppelte Wand 42 entsteht durch eine entsprechende Aufdopplung des Stahlblechteils, aus welchem das als Rollprofil ausgebildete Trägerprofil 24 hergestellt ist.

Es ist klar, dass die an den Mittelgang 18 angrenzende schmale und aufrecht verlaufende Wand 16 im Bereich des Schlitzes 40 ebenfalls einen entsprechend geformten Schlitz aufweisen muss. In einer anderen Ausführungsform wäre es auch denkbar, dass die Wand 16 im Überdeckungsbereich mit dem Trägerprofil 24 durch dessen Wand 42 gebildet wird.

Fig. 4 zeigt in einer schematischen Vorderansicht, einer Seitenansicht sowie einer Perspektivansicht jeweils den Nutenstein 32, welcher innerhalb der Sitzschiene 34 aufnehmbar ist. Es ist erkennbar, dass der Nutenstein 32 eine Breitseite 44 umfasst, mit welcher dieser gegen die als Stützwand ausgebildete Wand 42 der Sitzschiene 34 bzw. des Trägerprofils 24 abzustützen ist. Weiterhin umfasst der Nutenstein 32 auf der der Breitseite 44 gegenüberliegenden Seiten zwei abgeschrägte Flächen 46, 48, wobei die eine abgeschrägte Fläche 46 einen erheblich größeren Winkel α mit der Breitseite 44 einschließt als die andere abgeschrägte Fläche 48, welche mit der Breitseite 44 den Winkel β einschließt. An die abgeschrägte Fläche 48 schließt sich eine ebenfalls leicht abgeschrägte Fläche 50 an, in deren Bereich zwei Gewindebohrungen 52 zur Aufnahme der Schrauben 30 eingebracht sind.

Schließlich ist in Fig. 5 in einer schematischen Perspektivansicht das Trägerprofil 24 erkennbar, wobei in einer Abfolge von acht Schritten dargestellt ist, dass der Nutenstein 32 über den Schlitz 40 in die Sitzschiene 34 eingesetzt werden kann. So ist in der äußerst linken Darstellung der Nutensein 32 in etwa quer zur Sitzschiene 34 bzw. zum Trägerprofil 24 angeordnet und wird zunächst in den Schlitz 40 eingeschoben, bis dieser etwa eine rückwärtige Wand 54 (Fig. 3) auf der dem Schlitz 40 gegenüberliegenden Seite der Sitzschiene 34 erreicht. Im Anschluss daran kann der Nutenstein 32 in Richtung der abgeschrägten Fläche 46, welche den größeren Winkel α der Breitseite 44 einschließt, nach oben hin gedreht werden. Dies ist in den mittleren Darstellungen der Einzelschritte zum Einsetzen des Nutensteins 32 in die Sitzschiene 34 dargestellt. Bei den beiden äußerst rechten Darstellungen der letzten Schritte beim Einsetzen des Nutensteins 32 in die Sitzschiene 34 ist erkennbar, dass der Nutenstein 32 nun etwas nach oben angehoben werden muss, um vollständig in die Aufnahme innerhalb der Sitzschiene 34 zu gelangen. Hierzu ist die Sitzschiene 34 in einem oberen Bereich 56 (Fig. 3) entsprechend groß ausgebildet, so dass der Nutenstein 32 etwas nach oben gedrückt werden kann. Nachdem der Nutenstein 32 vollständig innerhalb der Sitzschiene 34 angeordnet ist, kommt dieser mit seiner Breitseite 44 an der Wand 42 der Sitzschiene 34 zur Anlage. Dies erfolgt insbesondere dadurch, dass die hintere Wand 54 der Sitzschiene 34 schräg ausgebildet ist. Beim Heruntersinken des Nutensteins 32 innerhalb der Sitzschiene 34 kommt dieser somit automatisch mit der den Schlitz 40 umfassenden Wand 42 zur Anlage. Nunmehr kann der Nutenstein 32 in Überdeckung mit der jeweiligen Schraube 30 gebracht und anschließend - über die Gewindebohrungen 52 - verschraubt werden. Durch ein entsprechendes Anziehen der Schrauben 30 wird der jeweilige Nutenstein 32 von der einen Seite und der Schenkel 28 der Stütze 28 des Sitzuntergestells 10 von der anderen Seite her gegen die Wand 42 des Trägerprofils 24 bzw. der Sitzschiene 34 verspannt, wodurch sich eine sichere Festlegung des Sitzuntergestells 10 an der Sitzschiene 34 ergibt.

Insgesamt ist aus den Zeichnungen erkennbar, dass die Sitzschiene 34 integraler Bestandteil des Trägerprofils 24 ist und somit bei der Fertigung der Bodenanlage 12 automatisch in diese integrierbar ist, ohne das weiter Montageschritte erforderlich wären. Weiterhin ist insbesondere aus den Fig. 3 bis 5 erkennbar, dass der jeweilige Nutenstein 32 auf einfache Weise über den Schlitz 40 in die Sitzschiene 34 eingesetzt werden kann. Dies erfolgt vorzugsweise nahe der Schenkel 28 der Stütze 26 des jeweiligen Sitzuntergestells 10. Dadurch muss der Nutenstein 32 dann lediglich um wenige Zentimeter entlang der Sitzschiene 34 verschoben werden, bis dieser in Überdeckung mit der Schraube 30 liegt, über welche das Sitzuntergestell 10 an der Sitzschiene 34 festgelegt werden kann. Somit ergibt sich eine äußerst einfache Montage der Sitzanlagen an der Bodenanlage 12 innerhalb des Fahrgastraums des Omnibusses.

Insbesondere aus Fig. 1 ist schließlich erkennbar, dass das Sitzuntergestell 10 auf der dem Trägerprofil 24 abgewandten Außenseite - also nahe der Seitenwand 22 - über eine weitere Stütze 58 an einer entsprechenden, nicht näher dargestellten Schiene festlegbar ist.

## Patentansprüche

1. Trägerprofil für eine Bodenanlage (12) eines Kraftwagens, insbesondere eines Omnibusses, wobei das Trägerprofil (24) mit einer aufbaufesten Sitzschiene (34) zur Aufnahme wenigstens eines Nutensteins (32) versehen ist, über welchen ein Sitzuntergestell (10) einer Sitzanlage an der Sitzschiene (34) festzulegen ist und die aufbaufeste Sitzschiene (34) in das Trägerprofil (24) der Bodenanlage (12) integriert ist,
**dadurch gekennzeichnet,**
**dass** das Trägerprofil (24) als aus einem Metallblechteil gestaltetes Rollprofil ausgebildet ist.

2. Trägerprofil nach Anspruch 1,
**dadurch gekennzeichnet,**
**dass** das Trägerprofil (24) einteilig ausgebildet und vorzugsweise aus einer Stahllegierung hergestellt ist.

3. Trägerprofil nach Anspruch 1,
**dadurch gekennzeichnet,**
**dass** die Sitzschiene (34) mit einem Schlitz (40) zur Verbindung des Sitzuntergestells (10) mit dem Nutenstein (32) versehen ist, wobei die an den Schlitz (40) angrenzenden Bereiche der Sitzschiene (34) eine gedoppelte Wand (42) aufweisen.

4. Trägerprofil nach Anspruch 1,
**dadurch gekennzeichnet,**
**dass** die Sitzschiene (34) eine Kammer des mehrere Kammern (36, 38) umfassenden Trägerprofils (24) bildet.

## Claims

1. Mounting profile for a floor construction (12) of a motor vehicle, in particular an omnibus, wherein the mounting profile (24) is provided with a supporting rail (34) located on the body for the accommodation of at least one sliding block (32), by way of which a seat base frame (10) of a seating system can be secured to the seat runner (34) and the supporting rail (34) located on the body is integrated into the mounting profile (24) of the floor construction (12),
**characterised in that**
the mounting profile (24) is designed as a rolled profile made from a sheet metal part.

2. Mounting profile according to claim 1,
**characterised in that**
the mounting profile (24) is designed in one part and preferably made from a steel alloy.

3. Mounting profile according to claim 1,
**characterised in that**
the seat runner (34) is provided with a slot (40) for joining the seat base frame (10) to the sliding block (32), the regions of the seat runner (34) which adjoin the slot (40) having a doubled wall (42).

4. Mounting profile according to claim 1,
**characterised in that**
the seat runner (34) forms a chamber (34) of the mounting profile (24), which comprises several chambers (36, 38).

## Revendications

1. Profilé de support pour le plancher (12) d'un véhicule automobile, en particulier un autocar, le profilé de support (24) étant pourvu d'une glissière de siège (34) fixée à la carrosserie pour loger au moins un coulisseau (32) au moyen duquel un châssis de siège (10) d'un dispositif d'assise est fixé sur la glissière de siège (34) et la glissière de siège (34) fixée à la carrosserie est intégrée dans le profilé de support (24) du plancher (12), **caractérisée en ce que** le profilé de support (24) est conçu comme un profilé roulé formé à partir d'un élément de tôle métallique.

2. Profilé de support selon la revendication 1, **caractérisé en ce que** le profilé de support (24) est réalisé d'une seule pièce et fabriqué de préférence en un alliage d'acier.

3. Profilé de support selon la revendication 1, **caractérisé en ce que** la glissière de siège (34) est dotée d'une fente (40) permettant de relier le châssis de siège (10) au coulisseau (32), les zones de la glissière de siège (34) adjacentes à la fente (40) présentant une double paroi (42).

4. Profilé de support selon la revendication 1, **caractérisé en ce que** la glissière de siège (34) forme une chambre du profilé de support (24) qui comprend plusieurs chambres (36, 38).
